# NEUE EUROPÄISCHE PATENTSCHRIFT

(11) **EP 1 401 601 B2**
(45) Veröffentlichungstag und Bekanntmachung des Hinweises auf die Entscheidung über den Einspruch: **16.02.2011**
(45) Hinweis auf die Patenterteilung: 06.06.2007
(21) Anmeldenummer: 02782421.8
(22) Anmeldetag: 18.06.2002
(51) Int. Cl.: B23B 27/08

(54) **SCHNEIDVORRICHTUNG**
CUTTING DEVICE
DISPOSITIF DE COUPE

(30) Priorität: 05.07.2001 DE 10132721
(43) Veröffentlichungstag der Anmeldung: 31.03.2004
(60) Teilanmeldung: 06022369.0
(73) Patentinhaber: Hartmetall-Werkzeugfabrik Paul Horn GmbH, 72072 Tübingen (DE)
(72) Erfinder: OETTLE, Matthias, 72585 Riederich (DE)
(74) Vertreter: Keck, Stephan
(86) Internationale Anmeldenummer: PCT/EP2002/006688
(87) Internationale Veröffentlichungsnummer: WO 2003/004203

(56) Entgegenhaltungen:
- DE-U- 8 804 365
- FR-A- 2 373 349
- FR-A- 2 542 229
- GB-A- 667 160
- GB-A- 1 369 096
- US-B1- 6 241 429

## Beschreibung

Die Erfindung betrifft eine Schneidvorrichtung mit einem Halter, gemäß der Merkmalsausgestaltung des Oberbegriffes des Patentanspruches 1.

Dahingehende Schneidvorrichtungen (US 5 267 817 A, WO 99/50 012) sind in einer Vielzahl von Ausführungsformen Stand der Technik und auf dem Markt frei erhältlich. Die bekannten Lösungen dienen insbesondere für das Stech- und Längsdrehen sowie für Abstech- und Abtrennvorgänge an einem rotierenden Werkstück, das als Drehteil regelmäßig rotationssymmetrisch aufgebaut ist. Die bekannten Schneidvorrichtungen weisen einen länglichen Halter mit quadratischem Querschnitt auf, der sich über den Bereich seines einen freien Endes an einem Werkzeughalter festlegen läßt, wobei mehrere Schneidvorrichtungen in einer Haltervorrichtung aufgenommen sein können und wobei häufig beengte Einbauverhältnisse vorhanden sind. Die Schneidvorrichtungen können dabei in der Gesamt-Haltervorrichtung übereinander, jedoch auch unmittelbar nebeneinander liegend in Reihe angeordnet sein. An seinem anderen Ende geht der Halter einstückig in einen blockartigen Klemmkopf über, der an seiner einen Seite über eine Aufnahme das spanabhebende Werkzeug aufnimmt. Dieser blockartige Klemmkopf weist nach allen Seiten hin im wesentlichen ebene Flächen auf, die im jeweils rechten Winkel ineinander übergehen. Insbesondere die Stirnseite des Klemmkopfes ist in Form einer geraden Ebene ausgebildet, die im rechten Winkel zu den Unter- und Oberseiten sowie den Längsseiten des Halters verläuft. Von dieser flächigen Ebene nach vorne in Richtung der Bearbeitungszone steht das spanende Werkzeug mit seiner Bearbeitungsschneide über und im Hinblick auf den genannten geometrischen Aufbau des Klemmkopfes muß die Schneide des Bearbeitungswerkzeuges am rotierenden Werkstück erst einen Freiraum schaffen, damit für eine tiefergehende Bearbeitung der Klemmkopf über seine gesamte Breite nachfolgen kann. Insbesondere bei einer beengten Einbausituation für die Schneidvorrichtung und bei kleinräumigen Bearbeitungsgebieten am rotierenden Werkstück, in das man beispielsweise nur eine dünne Bearbeitungsnut einbringen möchte, sind die bekannten Lösungen untauglich, da in dahingehenden Fällen das rotierende Werkstück dann mit der Stirnseite des Klemmkopfes kollidieren würde.

Durch die FR-A-2 373 349 ist eine Schneidvorrichtung mit einem Halter bekannt, der an einem Klemmkopf für die Aufnahme eines spanabhebenden austauschbaren Werkzeuges mit einer maulartigen Aufnahme versehen ist, die an einer Längsseite des Klemmkopfes angeordnet ist, dessen quer zu seiner Längsseite verlaufende Stirnseite einen für die spanabhebende Bearbeitung rotierenden Werkstück zugewandt ist, wobei die Stirnseite zumindest im Bereich in dem sie in die Aufnahme mündet mit einer Wölbung versehen ist, deren Krümmung der Krümmung des Werkstückes mit dem größten Durchmesser entspricht für das die Schneidvorrichtung vorgesehen ist. Mit der bekannten Lösung ist es mithin möglich, daß die gewölbte Stirnseite des Klemmkopfes gegenüber dem zur Bearbeitung anstehenden Werkstück zurücktritt, und das Bearbeitungswerkzeug steht demgegenüber, in einer Art Festlegerippe aufgenommen, in Richtung des Bearbeitungswerkzeuges deutlich vor, so daß nur in Abhängigkeit von der Breite der in Eingriff bringbaren Schneide sich eine Geometrie in dem rotierenden Werkstück vorgeben läßt, beispielsweise in Form einer ausgesprochen im Querschnitt schmal verlaufenden Ausnahmenut oder dergleichen. Durch die gewölbte Stirnfläche wird ein Raum geschaffen, in dem sich das rotierende Werkstück bewegen kann, so daß im Grunde der Klemmkopf während der Bearbeitung Teile des Werkzeuges mit aufnimmt und dergestalt es ermöglicht ist, daß das Bearbeitungswerkzeug über eine hohe Eindringtiefe verfügt, ohne daß der Klemmkopf erst in einen frei zu spanenden Raum des rotierenden Werkzeugs nachzuführen wäre.

Zum Aufweiten des Klemmspaltes und mithin zum Festlegen des austauschbaren Werkzeuges in der Aufnahme dient bei der bekannten Lösung ein quer zum eigentlichen Klemmspalt verlaufender Einstellspalt, der aus dem Klemmkopf nach obenhin ins Freie austritt. Die im Klemmkopf jeweils endenden Enden von Klemmspalt und Einstellspalt sind benachbart einander gegenüberliegend unter Einbezug einer dünnen Trennwand des Klemmkopfes zwischen ihnen benachbart angeordnet. Eine innerhalb der genannten Wölbung des Klemmkopfes mit der Krümmung des Werkstückes austretende Einstellschraube, die bei einer alternativen Ausführungsform der bekannten Lösung auch von der Oberseite in den Klemmkopf eingreift, erlaubt mit Anziehen derselben eine spreizende Aufweitung des Einstellspaltes, der insoweit über mit ihm verbundene Wandteile der Schneidvorrichtung in Form der vorstehenden Festlegerippe zum Festlegen des austauschbaren Werkzeuges den Klemmspalt in reversibler Weise verengt.

Durch den zusätzlichen Einstellspalt, der den gesamten Klemmkopf des Werkzeuges quer zu seiner Längsseite durchgreift, ist die Schneidvorrichtung bezogen auf die Kräfteaufnahme bei der spanenden Bearbeitung geschwächt. Ist die bekannte Schneidvorrichtung in Verbindung mit anderen Schneidvorrichtungen in Übereinander- oder Nebeneinanderanordnung in Bearbeitungseingriff mit dem Werkstück, ist aufgrund der ungünstigen Anordnung der Einstellschraube ein Austausch des verschlissenen Werkzeuges sehr schwer möglich, was insoweit den Montageaufwand für einen Austauschvorgang deutlich erhöht.

Schneidvorrichtungen gemäss dem Oberbegriff des Anspruchs 1 sind aus Werkzeugkatalogen der Firma lscar, z.B. aus "lscar Mini-Tools", lscar Ltd., 1999, bekannt.

Ausgehend von diesem Stand der Technik liegt der Erfindung als eine Aufgabe zugrunde, eine Schneidvorrichtung der zuletzt genannten gattungsgemäßen Art unter Beibehalten ihrer Vorteile, nämlich auch schmale Geometrien in ein Werkstück spanend in vorgebbarer Tiefe einzubringen, ohne daß es zu Kollisionen zwischen dem Bearbeitungswerkzeug und dem Werkstück kommt, dahingehend weiter zu verbessern, daß eine ausgesteifte Gesamtkonstruktion erreicht ist, die auch bei beengten Einbausituationen ohne weiteres eingesetzt werden kann und bei der auch bei einem Einsatz von mehreren Haltern an Schneidvorrichtungen der Montageaufwand für einen Austauschvorgang des Werkzeuges reduziert ist. Eine dahingehende Aufgabe ist mit Schneidvorrichtungen lösbar gemäß der Merkmalsausgestaltung des Patentanspruches 1.

Dadurch, daß gemäß Patentanspruch 1 die Wölbung der Stirnseite an der Oberseite des Klemmkopfes in eine schräg verlaufende Abplattung übergeht, die von einer den Klemmspalt durchdringenden Klemmschraube durchgriffen ist, mit der der freie Querschnitt des Klemmspaltes verändert werden kann, der zumindest den Klemmkopf durchgreift und in die Aufnahme mündet, ergibt sich für die Klemmschraube eine verbesserte Zugänglichkeit, wodurch die Austauschbarkeit des Werkzeuges verbessert wird.

Außerdem kommt die erfindungsgemäße Lösung mit nur einem im Querschnitt einzustellenden Klemmspalt aus. Auf einen zusätzlich einzustellenden Einstellspalt kann völlig verzichtet werden.

Die erfindungsgemäße Lösung kann auch bei beengten Einbausituationen ohne weiteres eingesetzt werden, und insbesondere erlaubt die beanspruchte Anordnung der Klemmschraube eine gute Zugänglichkeit der Schneidvorrichtung für einen Werkzeugtausch von oben her, so daß sich mit geringem Montageaufwand der Austauschvorgang rasch und zielgerichtet vornehmen läßt was die Stillstandszeiten deutlich verringert.

Insbesondere wenn mehrere Halter an Schneidvorrichtungen in einer zentralen Halteraufnahme einer Werkzeugmaschine oder dergleichen unmittelbar nebeneinander oder übereinander angeordnet sind, besteht die Möglichkeit über die von oben her zugängliche Klemmschraube ein Bearbeitungswerkzeug bei Verschleiß gegen ein neues zu tauschen, ohne die sonstige Halteranordnung in den Austauschvorgang mit einbeziehen zu müssen.

Bei einer bevorzugten Ausführungsform der erfindungsgemäßen Schneidvorrichtung ist die Aufnahme Teil einer Festlegerippe, die als integraler Bestandteil des Klemmkopfes von diesem vorsteht, wobei die Wölbung der Stirnseite vom Bereich der Aufnahme bis zur Unterseite des Klemmkopfes sich erstreckt. Aufgrund dieser Festlegerippe ist dennoch eine ausgesteifte Gesamtkonstruktion im Bereich des Klemmkopfes erhalten, und die bei der Bearbeitung auftretenden Kräfte können sicher von der Schneide des Bearbeitungswerkzeuges über dieses in die Festlegerippe und damit in den sonstigen Klemmkopf abgeleitet werden.

Bei der erfindungsgemäßen Schneidvorrichtung ist der Klemmspalt im Bereich seiner der Aufnahme abgewandten Längsseite zumindest teilweise von einer Gegenlagerstelle durchgriffen. Über die dahingehende Gegenlagerstelle wird sichergestellt, daß nicht einseitig der Klemmvorgang für das Bearbeitungswerkzeug vorgenommen wird, was gegebenenfalls zu Verkantungen führen würde, die letztendlich die Bearbeitungsgenauigkeit beeinträchtigen würden. Vielmehr ist über die Gegenlagerstelle sichergestellt, daß der Klemmspalt sich gleichmäßig verringert, so daß beim Festlegevorgang des Werkzeuges an der Festlegerippe keine Verkantungen auftreten können.

Bei einer weiteren besonders bevorzugten Ausführungsform der erfindungsgemäßen Schneidvorrichtung geht die gewölbte Stirnfläche an der Unterseite des Klemmkopfes in eine Abstützfläche über, die schräg zur Vorschubrichtung des Werkzeuges sich von der Aufnahme in Richtung des Klemmkopfes erstreckt. Über die dahingehende schräge Abstützfläche wird der Materialeinsatz für den Klemmkopf weiter reduziert, und dennoch ist die Gesamtkonstruktion des Klemmkopfes über die Abstützfläche derart ausgesteift, daß die Bearbeitungsgenauigkeit nicht beeinträchtigt ist. Da aufgrund der Abstützfläche Material im Bereich der Stirnfläche des Klemmkopfes eingespart werden kann, wird mithin im Bereich des Klemmkopfes weiterer Raum geschaffen, der vom rotierenden Werkstück bei der Bearbeitung ausgenutzt werden kann, ohne daß die Gefahr von Kollisionen gegeben ist.

Bei einer besonders bevorzugten Ausführungsform der erfindungsgemäßen Schneidvorrichtung ist der Abstand zwischen gewölbter Stirnseite des Klemmkopfes und der bearbeitenden Schneide des spanabhebenden Werkzeuges geringfügig größer als der größtmögliche Durchmesser des zur Bearbeitung mit diesem Werkzeug vorgesehenen rotierenden Werkstückes. Somit ist es möglich, entlang einer schmal aufbauenden Nutenbahn einen Abstechvorgang am Werkstück vorzunehmen, ohne daß es zu Kollisionen kommt. Es ist dann nicht mehr, wie im Stand der Technik notwendig, erst über das Werkzeug einen größeren Freiraum am Werkstück zu schaffen, um dann in mehreren Schritten den Abstechvorgang vornehmen zu können. Vielmehr ist mit einer Vorschubbewegung der Abstechvorgang möglich.

Weitere vorteilhafte Ausführungsformen sind Gegenstand der sonstigen Unteransprüche.

Im Folgenden wird die erfindungsgemäße Schneidvorrichtung anhand verschiedener Ausführungsbeispiele nach der Zeichnung in verschiedenen Ansichten näher erläutert. Dabei zeigen in prinzipieller und nicht maßstäblicher Form die
- Fig.1 - 3: eine erste Ausführungsform der Schneidvorrichtung und die
- Fig. 4 und 5: eine zweite Ausführungsform.

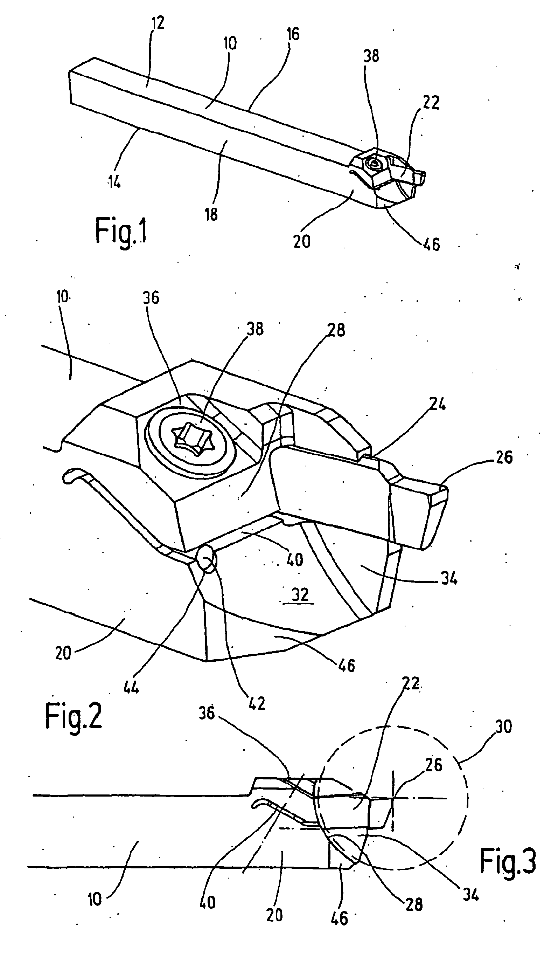

Wie die Fig.1 zeigt, weist die Schneidvorrichtung einen Halter 10 auf mit einem im wesentlichen quadratischen Querschnitt. In Blickrichtung auf die Fig.1 gesehen weist der Halter 10 eine Oberseite 12, eine Unterseite 14 sowie in Bearbeitungsrichtung gesehen eine linke und eine rechte Längsseite 16 bzw. 18 auf. Der Schaftteil des Halters 10 ist relativ lang ausgebildet, um dergestalt eine große Anlagefläche zu schaffen für die Halteraufnahme (nicht dargestellt) einer Werkzeugmaschine, wie einer Drehmaschine (nicht dargestellt) od. dgl.. An seinem vorderen Ende ist der Halter 10 mit einem Klemmkopf 20 versehen. Der blockartige Klemmkopf 20 geht mit seinen Seitenflächen bis auf seine Stirnseite bündig in die Seitenflächen des Halters 10 über und steht nur im Bereich der Oberseite des Halters 10 mit einem vorgebbaren Überstand vor. Für die Aufnahme eines spanabhebenden Werkzeuges 22 ist der Klemmkopf 20 mit einer maulartigen Aufnahme 24 versehen, die bei der gezeigten Ausführungsform an der linken Längsseite 16 des Klemmkopfes 20 angeordnet ist. Das spanabhebende Werkzeug 22 bildet insbesondere ein Hartmetallschneidwerkzeug aus mit zwei diametral einander gegenüberliegenden Bearbeitungsschneiden 26. In der Zeichnung ist dabei nur die zur Bearbeitung vorgesehene Bearbeitungsschneide 26 dargestellt, die bei Verschleiß durch Öffnen der maulartigen Aufnahme 24 des spanabhebenden Werkzeuges 22 freigegeben werden kann. Nach Drehen des spanabhebenden Werkzeuges 22 um 180° um seine Querachse ist dann die neue Bearbeitungsschneide 26 dadurch in Eingriff mit dem Werkstück bringbar, daß man in einem weiteren Schritt das spanabhebende Werkzeug 22 dann über die Klemmaufnahme 24 wieder am Klemmkopf 20 des Halters 10 festlegt. Der dahingehende Austausch ist üblich, so daß an dieser Stelle hierauf nicht mehr näher eingegangen wird.

Quer zu den Längsseiten 16 und 18 des Halters 10 weist der Klemmkopf 20 eine Stirnseite 28 auf, die bei einem spanabhebenden Bearbeitungsvorgang einem rotierenden Werkstück 30 (Drehteil) zugewandt ist. Das in der Fig.3 dargestellte Werkstück 30 soll mit der Schneidvorrichtung spanend bearbeitet werden, beispielsweise von außen einem Stech- oder Längsdrehvorgang ausgesetzt sein. Des weiteren soll es möglich sein, mit der Schneidvorrichtung einen Abstechvorgang durchzuführen, bei dem die Bearbeitungsschneide 26, wie in der Fig.3 dargestellt, bis zur Längsachse bzw. zur Drehmitte des Werkstückes 30 vordringt, um so Teile des Werkstückes vom Werkstück 30 zu trennen, das in einem Drehfutter od. dgl. an der Maschine verbleibt. Für die nachfolgende Beschreibung soll das Werkstück 30 einen Bearbeitungsdurchmesser von maximal 20mm aufweisen. Je nachdem, wie hier die Bearbeitungsgeometrien gewählt werden, ist dann die Schneidvorrichtung mit ihren geometrischen Abmessungen an die Bearbeitungssituation entsprechend anzupassen. Wie sich jedenfalls aus der Darstellung nach der Fig.3 ergibt, erstreckt sich in der dort dargestellten Bearbeitungssituation, bei dem die Bearbeitungsschneide 26 die Mitte des Werkstückes 30 erreicht hat, die Unterseite 14 des Halters 10 bis zur wirksamen Kante der Bearbeitungsschneide 26 über den Radi us des Drehteils oder Werkstückes 30, was einer Eingriffshöhe von der Hälfte des Bearbeitungsdurchmessers, also 10mm, entspricht.

Wie sich aus den Fig.1 bis 3 und insbesondere aus der Fig.2 ergibt, ist die Stirnseite 28 zumindest im Bereich, in dem sie in die Aufnahme 24 übergeht, mit einer Wölbung 32 versehen, deren Krümmung der Krümmung des Werkstückes 30 mit dem größten Durchmesser, hier 20mm, entspricht, für das die Schneidvorrichtung als spanabhebendes Werkzeug 22 vorgesehen ist.

Die Aufnahme 24 ist Teil einer Festlegerippe 34 des Klemmkopfes 20. Die dahingehende Festlegerippe 34 in Verlängerung der linken Seite 16 des Halters 10 ist mithin integraler Bestandteil des Klemmkopfes 20. Des weiteren geht die Wölbung 32 der Stirnseite 28 an der Oberseite 12 des Klemmkopfes 20 in eine schräg verlaufende Abplattung 36 in der Art einer Seitenfläche über, die von einer Klemmschraube 38 durchgriffen ist, die den freien Querschnitt einer Klemmspalte 40 verändert, die zumindest den Klemmkopf 20 durchgreift und die in einer gebogenen Kurve mit ihrer einen Seite im Bereich des Halters 10 endet und mit ihrem anderen Bereich ins Freie mündet, und zwar an der gewölbten Stirnseite 28. Löst man die Klemmschraube 38, wird der Klemmspalt 40 freigegeben, und durch die Eigenelastizität der Materialteile des Klemmkopfes 20 klafft die maulartige Aufnahme 24 etwas auseinander und gibt das spanabhebende Werkzeug 22 für einen Austausch frei. In umgekehrter Reihenfolge läßt sich dergestalt dann das spanabhebende Werkzeug 22 in der maulartigen Klemmaufnahme 24 wieder festlegen.

Wie sich des weiteren aus der Fig. 3 ergibt, ist der Abstand zwischen gewölbter Stirnseite 28 des Klemmkopfes 20 und der bearbeitenden Schneide 26 des spanabhebenden Werkzeuges 22 geringfügig größer als der größtmögliche Durchmesser (20mm) des zur Bearbeitung mit diesem spanabhe benden Werkzeug 22 vorgesehenen rotierenden Werkstückes 30. Somit ist im Klemmkopf 20 ein Freiraum geschaffen, in den die rotierenden Werkstückteile 30 eintreten können, ohne daß es bei einer Bearbeitung mit dem spanabhebenden Werkzeug 22 zu einer Kollision kommen würde zwischen Klemmkopf 20 des Halters 10 und dem Werkstück 30. Dergestalt lassen sich sehr große Bearbeitungstiefen am Werkstück 30 erreichen und ausgesprochen schmal aufbauende Nutgeometrien, ohne daß hierfür erst am Werkstück 30 durch Spanabhebung Platz geschaffen werden müßte für das Vordringen des Klemmkopfes 20 mit dem spanabhebenden Werkzeug 22.

Wie sich aus der Fig. 2 ergibt, ist der Klemmspalt 40 im Bereich seiner der Aufnahme 24 abgewandten Längsseite (rechte Seite 18) zumindest teilweise von einer Gegenlagerstelle 42 durchgriffen, die in der Art eines Stiftes in eine Ausnehmung 44 im Klemmkopf 20 eingreift. Wird die Klemmschraube 38 für einen Festlegevorgang angezogen, kann sich mithin die obere Wand des Klemmspaltes 40 an der Gegenlagerstelle 42 abstützen und der Klemmvorgang erfolgt über die gesamte Breite des spanabhebenden Werkzeuges 22 über die Festlegerippe 34 nicht zu einem Verkanten kommen kann, was die Bearbeitungsgenauigkeit beeinträchtigen könnte. Der Klemmspalt 40, der über den Klemmkopf 20 in Richtung des Halters 10 in diesen hineinragt, erfährt hierdurch eine weitere zusätzliche Abstützung.

Des weiteren geht die gewölbte Stirnseite 28 an der Unterseite 14 des Klemmkopfes 20 in eine Abstützfläche 46 über, die schräg zur Vorschubrichtung des spanabhebenden Werkzeuges 22 sich von der Aufnahme 24 in Richtung des Klemmkopfes 20 erstreckt. Die dahingehende Abstützfläche 46 spart wiederum Material am Klemmkopf 20 aus, was die Kollisionsgefahr mit dem zu bearbeitenden Werkstück 30 verringert. Trotz des dahingehenden Materialverzichtes kommt es über die Abstützfläche 46 sowie die gewölbte Stirnseite 28 zu einer Aussteifung der Festlegerippe 34 mit der Folge, daß trotz des geringen Materialeinsatzes für den Klemmkopf 20 das spanabhebende Werkzeug 22 sicher in seiner Aufnahme 24 fixiert ist, so daß die Schneidvorrichtung auch für hochgenaue Bearbeitungsvorgänge einsetzbar ist.

Entgegen der Darstellung nach den Fig. 1 bis 3 kann die Festlegerippe 34 mit dem spanabhebenden Werkzeug 22 auch auf der gegenüberliegenden, also in Bearbeitungsrichtung auf der rechten Seite 18 angeordnet sein. Auch können gegebenenfalls in einer horizontalen Ebene mehrere Halter 10 (nicht dargestellt) mit spanabhebenden Werkzeugen 22 nebeneinander angeordnet sein, wobei dann durchaus zwei benachbart zueinander angeordnete Schneidvorrichtungen einmal auf der linken und benachbart gegenüberliegend auf der rechten Seite das spanabhebende Werkzeug 22 aufweisen können. Auch ist es möglich, in einer vertikalen Ebene mehrere der Schneidvorrichtungen übereinander in Bearbeitungsanordnung zu bringen, sofern Bearbeitungsvorgänge dies vorgeben sollten.

Die nachfolgende Ausführungsform wird nunmehr nur noch insofern erläutert, als sie sich wesentlich von der vorangehenden Ausführungsform unterscheidet. Dabei werden für dieselben Bauteile dieselben Bezugszeichen eingesetzt, wobei die bisher hierzu erfolgten Ausführungen auch für die weitere Ausführungsform entsprechend gelten.

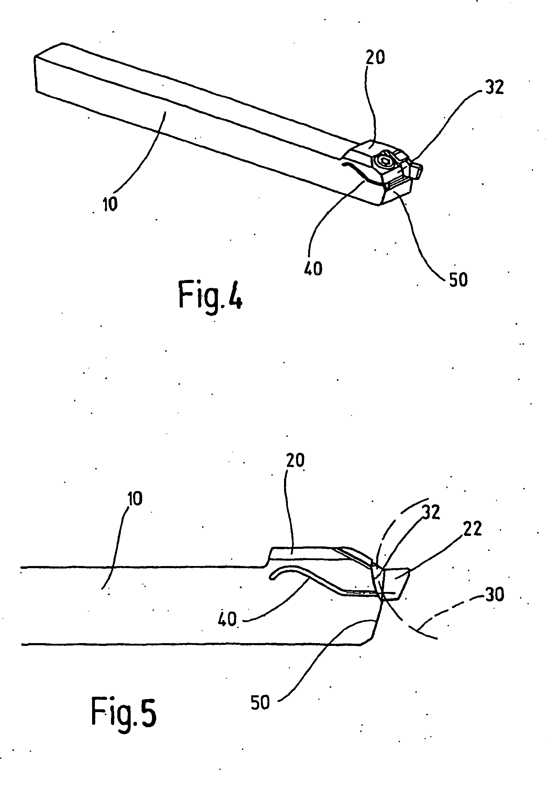

Bei der zweiten Ausführungsform nach den Fig. 4 und 5 ist die Wölbung 32 der Stirnseite 28 nur im Bereich der Höhe der Aufnahme 24 gegeben, und ansonsten ist die Stirnseite 28, wie dies insbesondere die Fig. 5 zeigt, mit einer zur Unterseite 14 hin zurückweichenden Ablaufschräge 50 versehen. Die dahingehende Ablaufschräge 50 stellt gleichfalls sicher, daß es nicht zu ungewollten Kollisionen zwischen Schneidvorrichtung und Werkstück 30 kommen kann. Da die Wölbung 32 mit ihrer Krümmung aber nur partiell durch die Stirnseite 28 realisiert ist, ist es mit der Bearbeitungsschneide 26 nicht möglich, wie bei der vorstehend beschriebenen Lösung, bis zur Mitte des Werkstückes 30, also bis zu seiner Drehachse, vorzustoßen. Die zweite Ausführungsform ist also für spezielle Bearbeitungssituationen vorgesehen, bei denen ein Abstechvorgang beispielsweise nicht zwingend vorgeschrieben ist. Dennoch ist es auch hier möglich, ohne mit dem Werkstück 30 zu kollidieren, zum Herstellen einer schmalen Bearbeitungsnut weit mit dem spanabhebenden Werkzeug 22 in das Werkstück 30 vorzudringen.

Um Kollisionen zu vermeiden, ist aber jedenfalls vorzusehen, daß der Abstand zwischen gewölbter Stirnseite 28 des Klemmkopfes 20 und der bearbeitenden Schneide 26 des spanabhebenden Werkzeuge 22 geringfügig größer ist als der größtmögliche Durchmesser des zur Bearbeitung mit diesem spanabhebenden Werkzeug 22 vorgesehenen, rotierenden Werkstükkes 30. Mit der erfindungsgemäßen Schneidvorrichtung läßt sich eine hochgenaue Bearbeitung durchführen und es lassen sich sehr große Eindringtiefen am Werkstück realisieren, ohne daß man erst, wie im Stand der Technik, entsprechende Freiräume im Werkstück 30 spanend schaffen müßte, damit der Klemmkopf 20 der Bearbeitungsrichtung des spanabhebenden Werkzeuges 22 in das Werkstück 30 nachfolgen kann.

## Patentansprüche

1. Schneidvorrichtung mit einem Halter (10), der an einem Klemmkopf (20) für die Aufnahme eines spanabhebenden Werkzeuges (22) mit einer maulartigen Aufnahme (24) versehen ist, die an einer Längsseite (16) des Klemmkopfes (20) angeordnet ist, dessen quer zu seiner Längsseite (16) verlaufende Stirnseite (28) einem für die spanabhebende Bearbeitung rotierenden Werkstück (30) zugewandt ist, wobei die Stirnseite (28) zumindest im Bereich, in dem sie in die Aufnahme (24) mündet, mit einer Wölbung (32) versehen ist, deren Krümmung der Krümmung des Werkstückes (30) mit dem größten Durchmesser entspricht, für das die Schneidvorrichtung vorgesehen ist, wobei die Wölbung (32) der Stirnseite (28) an der Oberseite (12) des Klemmkopfes (20) in eine schräg verlaufende Abplattung (36) übergeht, die von einer den Klemmspalt (40) durchdringenden Klemmschraube (38) durchgriffen ist, mit der der freie Querschnitt des Klemmspaltes (40) verändert werden kann, welcher zumindest den Klemmkopf (20) durch greift und in die Aufnahme (24) mündet, **dadurch gekennzeichnet, dass** der Klemmspalt (40) im Bereich seiner der Aufnahme (24) abgewandten Längsseite (18) zumindest teilweise von einer Gegenlagerstelle (42) durchgriffen ist.

2. Schneidvorrichtung nach Anspruch 1, **dadurch gekennzeichnet, daß** die Aufnahme (24) Teil einer Festlegerippe (34) ist, die als integraler Bestandteil des Klemmkopfes (20) von diesem vorsteht, und daß die Wölbung (32) der Stirnseite (28) vom Bereich der Aufnahme (24) sich bis zur Unterseite (14) des Klemmkopfes (20) erstreckt.

3. Schneidvorrichtung nach einem der Ansprüche 1 bis 2, **dadurch gekennzeichnet, daß** die Wölbung (32) der Stirnseite (28) mit ihrer vorgegebenen Krümmung sich über die gesamte Höhe des Klemmkopfes (20) erstreckt.

4. Schneidvorrichtung nach einem der Ansprüche 1 bis 3, **dadurch gekennzeichnet, daß** der Abstand zwischen gewölbter Stirnseite (28) des Klemmkopfes (20) und der bearbeitenden Schneide (26) des spanabhebenden Werkzeuges (22) geringfügig größer ist als der größtmögliche Durchmesser des zur Bearbeitung mit diesem spanabhebenden Werkzeug (22) vorgesehenen rotierenden Werkstückes (30).

5. Schneidvorrichtung nach einem der Ansprüche 1 bis 4, **dadurch gekennzeichnet, daß** die gewölbte Stirnseite (28) an der Unterseite (14) des Klemmkopfes (20) in eine Abstützfläche (46) übergeht, die schräg zur Vorschubrichtung des spanabhebenden Werkzeuges (22) sich von der Aufnahme (24) in Richtung des Klemmkopfes (20) erstreckt.

6. Schneidvorrichtung nach einem der Ansprüche 1 bis 5, **dadurch gekennzeichnet, daß** das spanabhebende Werkzeug (22) mit zwei diametral einander gegenüberliegenden wirksamen Schneiden (26) versehen ist.

## Claims

1. Cutting device with a holder (10), equipped with a mouth-like take-up (24) for receiving a chip removing tool (22) on a clamping head (20), located on a longitudinal side (16) of the clamping head (20), the facing side (28) of which extending transverse to its longitudinal side (16) and facing a workpiece (30) rotating for the chip removing processing of the same, whereby the facing side (28) is equipped with a bead (32) at least in the area in which the same opens out into the take-up (24), the arc of which equals the arc of the tool (30) with the largest diameter envisaged for the cutting device, wherein the bead (32) of the facing side (28) transforms into a diagonally flattening (36) on the upper side (12) of the clamping head (20), the same being penetrated by a clamping screw (38) projecting into the clamping gap (40), with which the free cross-section of the clamping gap (40) can be changed, the same penetrating at least the clamping head (20) and opening out into the take-up (24), **characterised in that** the clamping gap (40) is penetrated at least in part by a counter bearing (42) in the area of its longitudinal side (18) facing away from the take-up (24).

2. Cutting device according to Claim 1, **characterised in that** the take-up (24) forms a part of a fitting rib (34) which projects from the clamping head (20) as an integral part of the same, and **in that** the bead (32) of the facing side (28) extends from the area of the take-up (24) as far as the underside (14) of the clamping head (20).

3. Cutting device according to one of the Claims 1 to 2, **characterised in that** the bead (32) on the facing side (28) extends across the entire height of the clamping head (20) with its predetermined arc.

4. Cutting device according to one of the Claims 1 to 3, **characterised in that** the distance between the beaded facing side (28) of the clamping head (20) an the processing blade (26) of the chip removing tool (22) is somewhat larger than the largest possible diameter of the rotating workpiece (30) envisaged for processing with this chip removing tool (22).

5. Cutting device according to one of the Claims 1 to 4, **characterised in that** the beaded facing side (28) transforms into a support surface (46) on the underside (14) of the clamping head (20), which extends diagonal in relation to the advancing direction of the chip removing tool (22) from the take-up (24) in the direction of the clamping head (20).

6. Cutting device according to one of the Claims 1 to 5, **characterised in that** the chip removing tool (22) is equipped with two diametrically opposing effective blades (26).

## Revendications

1. Dispositif de coupe ayant un élément de retenue (10) qui, sur une tête de serrage (20), est muni, pour loger un outil d'enlèvement de copeaux (22), d'un logement (24) de type mâchoire qui est disposé sur un grand côté (16) de la tête de serrage (20) dont le côté frontal (28), placé transversalement à son grand côté (16), est tourné vers une pièce (30) en rotation pour l'usinage par enlèvement de copeaux, le côté frontal (28) étant, au moins dans la zone dans laquelle il débouche dans le logement (24), muni d'une cambrure (32) dont la courbure correspond à la courbure de la pièce (30) ayant le plus grand diamètre pour laquelle le dispositif de coupe est prévu, la cambrure (32) du côté frontal (28), sur le côté supérieur (12) de la tête de serrage (20), se transforme en un aplatissement (36) disposé obliquement qui est traversé par une vis de serrage (38) pénétrant dans l'interstice de serrage (40), et avec laquelle la section transversale libre de l'interstice de serrage (40) peut être modifiée, interstice qui traverse au moins la tête de serrage (20) et débouche dans le logement (24), **caractérisé en ce que** l'interstice de serrage (40), dans la zone de son grand côté (18) éloigné du logement (24), est traversé au moins partiellement par un emplacement de butée (42).

2. Dispositif de coupe selon la revendication 1, **caractérisé en ce que** le logement (24) fait partie d'une nervure de localisation (34) qui, en tant que composante intégrale de la tête de serrage (20), fait saillie à partir de cette dernière, et **en ce que** la cambrure (32) du côté frontal 28) s'étend depuis la zone du logement (24) jusqu'au côté inférieur (14) de la tête de serrage (20).

3. Dispositif de coupe selon une des revendications 1 ou 2, **caractérisé en ce que** la cambrure (32) du côté frontal (28), avec sa courbure prédéfinie, s'étend sur toute la hauteur de la tête de serrage (20).

4. Dispositif de coupe selon une des revendications 1 à 3, **caractérisé en ce que** l'intervalle entre le côté frontal (28) cambré de la tête de serrage (20) et la lame (26) d'usinage de l'outil d'enlèvement de copeaux (22) est légèrement plus grand que le plus grand diamètre possible de la pièce (30) en rotation prévue pour l'usinage avec cet outil d'enlèvement de copeaux (22).

5. Dispositif de coupe selon une des revendications 1 à 4, **caractérisé en ce que** le côté frontal (28) cambré, sur le côté inférieur (14) de la tête de serrage (20), se transforme en une surface d'appui (46) qui s'étend, obliquement par rapport à la direction d'avance de l'outil d'enlèvement de copeaux (22), depuis le logement (24) en direction de la tête de serrage (20).

6. Dispositif de coupe selon une des revendications 1 à 5, **caractérisé en ce que** l'outil d'enlèvement de copeaux (22) est muni de deux lames (26) actives diamétralement opposées entre elles.
